(19) Europäisches Patentamt
European Patent Office
Office européen des brevets

(11) **EP 2 743 305 B1**

## (12) EUROPEAN PATENT SPECIFICATION

(45) Date of publication and mention
of the grant of the patent:
**22.07.2015 Bulletin 2015/30**

(21) Application number: **12197601.3**

(22) Date of filing: **17.12.2012**

(51) Int Cl.:
***C08L 23/06*** (2006.01)    ***F16L 9/12*** (2006.01)
***C08L 23/10*** (2006.01)    *F16L 1/00* (2006.01)

(54) **Process for the preparation of a high density polyethylene blend**

Verfahren

Procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.06.2014 Bulletin 2014/25**

(73) Proprietor: **Borealis AG**
**1220 Vienna (AT)**

(72) Inventors:
• **Hristov, Velichko**
**4040 Linz (AT)**
• **Liu, Yi**
**4209 Engerwitzdorf (AT)**
• **Tyagi, Sandeep**
**4020 Linz (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 1 772 485**        **EP-A1- 1 772 486**
**EP-A1- 2 011 822**        **EP-A1- 2 354 184**
**WO-A2-2007/022908**

• **SONG S ET AL: "Effect of small amount of ultra
high molecular weight component on the
crystallization behaviors of bimodal high density
polyethylene", POLYMER, ELSEVIER SCIENCE
PUBLISHERS B.V, GB, vol. 49, no. 12, 10 June
2008 (2008-06-10) , pages 2964-2973,
XP022703137, ISSN: 0032-3861, DOI:
10.1016/J.POLYMER.2008.04.050 [retrieved on
2008-05-02]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention concerns pipes comprising a multimodal polyethylene composition.. In particular, the invention relates to pipes comprising a polyethylene composition comprising a high density multimodal polyethylene component and an ultrahigh molecular weight polyethylene homopolymer component. The invention also covers a process for making pipes from the multimodal polyethylene composition.

Pipes constructed from polymer materials have a multitude of uses, such as fluid transport, i.e. the transport of liquids or gases, e.g. water or natural gas. During transport, it is normal for the fluid to be pressurised. Moreover, the transported fluid may have varying temperatures, usually within the range from 0°C to 50°C. Such pressurised pipes are preferably constructed from polyolefins usually unimodal or bimodal polyethylene such as medium density polyethylene (MDPE; density: 0.930-0.942 $g/cm^3$) and high density polyethylene (HDPE; density: 0.942 - 0.965 $g/cm^3$).

The expression "pressure pipe" used herein refers to a pipe which, when used, is subjected to a positive pressure, that is the pressure inside the pipe is higher than the pressure outside the pipe.

Multimodal polyethylene polymers are well known in the art. A multimodal polyethylene system typically comprises a high molecular weight (HMW) component and a low molecular weight (LMW) component. The HMW component confers good mechanical properties to the system, whilst the LMW component provides good processability. Improved mechanical properties can be achieved by increasing the molecular weight of the HMW component. This, however, is usually at the cost of a loss in homogeneity resulting from an increase in the viscosity ratio between the HMW and LMW components, which can in turn actually be detrimental to the mechanical properties attained.

Further improved mechanical properties are possible by including an ultra high molecular weight (UHMW) fraction into a multimodal polyethylene system. There are serious compatibility problems however, when such a high Mw species is added. For example, Ogunniyi et al (Journal of Applied Polymer Science, 2005, 97, 413-425) and Vadhar et al (Journal of Applied Polymer Science, 1986, 32, 5575-5584) both report the need for long blending times of the order of 15 minutes in a batch mixer when UHMW polyethylene was added to other polyethylenes.

The incorporation of UHMW polyethylene into a polyethylene composition as a copolymer is also known and is reported in, for example, WO 2007/042216, WO 96/18677 and WO 2006/092378.

The inclusion of UHMW polyethylene into HDPE *via* extrusion has also been investigated and has been carried out using a co-rotating twin screw extruder by Huang and Brown (Polymer, 1992, 33, 2989-2997). However, although the UHMW polyethylene particles were found to be well bonded in the matrix and this helped to slow down the rate of crack propagation, when analysed under SEM, the UHMW polyethylene was found to remain in large separate domains with no evidence of "melting" into the HDPE matrix. For these reasons, the amount of UHMW polyethylene is limited to low loadings.

In WO94/28064, polyethylene compositions are reported comprising a UHMW component and a unimodal HDPE component.

The present inventors sought new blends for the formation of pipes, in particular pressure pipes, with outstanding properties. In particular, the inventors sought pipes that meet the PE125 standard in terms of mechanical properties. According to ISO 9080, a new pressure class for PE would be made to meet PE125 requirements, not realized today. This means that the pipes can withstand a pipe wall stress of 12.5 MPa for 50 years at 20°C without fracturing.

In order to move from the PE100 standard to PE125 performance, a significant improvement in hydrostatic pressure resistance is required. Thus, either an increased intercept or a decreased slope of the ductility line is expected. For Ziegler Natta bimodal HDPEs, this is challenging as failure time correlates positively with a material's stiffness/density and, by extrapolation, the required pressure resistance for PE125 appears to be unachievable for a feasible stiffness/density of HDPE. The present inventors have found that by incorporating an UHMWPE in a multimodal HDPE matrix, PE125 performance can be achieved.

It is an object of the present invention to provide pipes comprising a blend of HDPE and UHMWPE which have desirable mechanical properties and processability. Specifically, it is desired to produce a blend of an UHMW polyethylene into a multimodal high density polyethylene matrix at commercially relevant loadings, allowing advantage to be taken of the resulting enhanced mechanical properties.

A further problem when manufacturing pipes, particularly large diameter pipes, is that it is difficult to maintain uniform dimensions around the pipe. That is due to gravity flow of the polymer melt, causing it to flow from an upper part of the pipe to a lower part (often called "sagging"). Thus, the wall thickness at the upper part of the pipe becomes smaller than at the lower part of the pipe. The sagging problem is particularly pronounced for thick-walled large diameter pipes.

It has now been discovered that pipes meeting the PE125 requirement, and which do not sag can be prepared from a specific, well defined blend of multimodal polyethylene and UHMW polyethylene.

The present inventors have found that the combination of a particular high density multimodal polyethylene polymer with a particular homopolymer ultra high molecular weight polyethylene component can result in a blend which provides the necessary properties and allows the formation of pipes that surprisingly meet the requirements of PE125 without sag. Moreover, these blend components can surprisingly be blended together to give homogeneous blends despite the very high molecular weights involved.

Whilst UHMWPE is a well-known intractable polymer due to its extremely high molecular weight and entanglements between long molecular chains, there is little literature showing the benefit of UHMWPE on the creep resistance of a pipe.

## Summary of Invention

Thus, viewed from a first aspect the invention provides a pipe comprising high density polyethylene blend, comprising

(A) 55 to 95 wt% of a high density multimodal polyethylene component having a density of at least 940 kg/m$^3$, and
(B) 5 to 45 wt% of an ultra-high molecular weight polyethylene homopolymer having a nominal viscosity molecular weight Mv of 1,500,000 to 4,000,000 g/mol (UHMW polyethylene);
and wherein said blend has an MFR$_{21}$ of 10.0 g/10min or less and a density of at least 940 kg/m$^3$.

Preferably said pipe does not fail before 100 h at a stress of 14.5 MPa and/or before 1000 h at 13.9 MPa. Pipes of the invention therefore meet the PE125 quality standard.

Viewed from another aspect the invention provides a process for the preparation of a pipe as hereinbefore defined comprising mixing

(A) 55 to 95 wt% of a high density multimodal polyethylene component having a density of at least 940 kg/m$^3$, and
(B) 5 to 45 wt% of an ultra-high molecular weight polyethylene homopolymer having a nominal viscosity molecular weight Mv of 1,000,000 to 4,000,000 g/mol (UHMW polyethylene);
extruding the formed mixture at least, 4 times only, so as to form a blend having an MFR$_{21}$ of 10.0 g/10min or less and a density of at least 940 kg/m$^3$;
and forming said blend into a pipe.

Viewed from another aspect the invention provides the use of the blend as hereinbefore defined in the manufacture of a pipe.

Viewed from another aspect the invention provides a pipe obtained by a process as hereinbefore defined.

## Detailed Description of Invention

The tests for any claimed parameter are given in the "analytical tests" section of the text which precedes the examples.

Wherever the term "molecular weight Mw" is used herein, the weight average molecular weight is meant. Wherever the term "molecular weight Mv" is used herein, the nominal viscosity molecular weight is meant.

The polyethylene blend of the invention comprises at least two components: a high density multimodal polyethylene component, and an ultra-high molecular weight polyethylene homopolymer component. Taken together these form the polyethylene blend of the invention. In all embodiments, the blend is an HDPE, i.e. one having a density of at least 940 kg/m$^3$.

## Blend Properties

The properties of the blend are reported below. The parameters which follow may be measured in the presence of standard additives that are inherently present in commercial polymers which may be used to manufacture the blends of the invention.

The polyethylene blend of the invention preferably has a density according to ISO 1183 at 23°C of at least 940 kg/m$^3$, preferably at least 945 kg/m$^3$, more preferably at least 950 kg/m$^3$, especially at least 952 kg/m$^3$. The upper limit for density may by 980 kg/m$^3$, preferably 975 kg/m$^3$, especially 970 kg/m$^3$. A highly preferred density range is 950 to 965 kg/m$^3$, especially 952 to 961 kg/m$^3$.

The MFR$_{21}$ according to ISO 1133 of the polyethylene blend of the invention is preferably in the range of 0.05 to 10 g/10 min, preferably 0.1 to 8 g/10min, especially 0.2 to 5 g/10min.

The polyethylene blend preferably has an MFR$_5$ of less than 1.0 g/10min, preferably less than 0.5 g/10min, even more preferably less than 0.2 g/10min.

The polydispersity index (PI) of the polyethylene blends of the invention is preferably in the range 0.5 to 10 Pa$^{-1}$, more preferably 0.8 to 7 Pa$^{-1}$.

The blends of the invention exhibit remarkable shear thinning properties making them ideal for pipe formation.

The shear thinning index (2.7/210) may be at least 160, preferably at least 200, especially at least 250.

Most significantly, the blend has a viscosity at a shear stress of 747 Pa (eta747) of 1,000 kPas or higher, especially 3,000 kPas or higher, such as 5,000 kPas or higher, in particular 10,000 kPas or higher. With 4-pass extrusion as described further below, we have achieved values of 15,000 kPas or higher.

As noted below, it is preferred if the pipes of the invention are not crosslinked. Values of XHI (xylene hot insoluble) are preferably less than 1%.

**High Density Multimodal Polyethylene Component**

The blend of the invention includes a high density multimodal polyethylene component, i.e. one having a density of at least 940 kg/m$^3$. The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

Component (A) of the blend of the invention is a high density multimodal polyethylene and is preferably present in an amount of 55 to 95 wt%, such as 80 to 93 wt%, preferably 85 to 92 wt% of the blend.

The multimodal polyethylene component (A) of the invention preferably has a density according to ISO 1183 at 23°C of at least 940 kg/m$^3$, preferably at least 945 kg/m$^3$. The upper limit for density may be 980 kg/m$^3$, preferably 975 kg/m$^3$, especially 970 kg/m$^3$. A highly preferred density range is 945 to 965 kg/m$^3$.

The MFR$_{21}$ according to ISO 1133 of the multimodal polyethylene of the invention is preferably in the range of 1 to 20 g/10min, preferably 2 to 15 g/10 min. Preferably the multimodal polyethylene component (A) has an MFR$_{21}$ of 3 to 12 g/10min.

The MFR$_5$ according to ISO 1133 of the multimodal polyethylene component (A) of the invention is preferably less than 1.0 g/10min.

Component (A) preferably has a M$_w$ of at least 70,000 g/mol, more preferably at least 120,000 g/mol. The Mw of the Component (A) should be less than 400,000 g/mol, preferably less than 300,000 g/mol.

The Mw/Mn of component (A) may be at least 4, such as at least 10, such as 10 to 35.

In all embodiments of the invention, it is preferable if component (A) is a multimodal polyethylene comprising at least (i) a lower weight average molecular weight (LMW) ethylene homopolymer or copolymer component, and (ii) a higher weight average molecular weight (HMW) ethylene homopolymer or copolymer component. Preferably, at least one of said LMW and HMW components is a copolymer of ethylene with at least one comonomer. It is preferred that at least said HMW component is an ethylene copolymer. Alternatively, if one of said components is a homopolymer, then said LMW is the preferably the homopolymer.

Said LMW component of multimodal polymer preferably has a MFR$_2$ of at least 5 g/10 min, preferably at least 50 g/10 min, more preferably at least 100 g/10min.

The density of LMW component of said multimodal polymer may range from 950 to 980 kg/m$^3$, e.g. 950 to 970 kg/m$^3$.

The LMW component of said multimodal polymer may form from 30 to 70 wt%, e.g. 40 to 60% by weight of the multimodal polymer with the HMW component forming 70 to 30 wt%, e.g. 60 to 40% by weight. In one embodiment said LMW component forms 50 wt% or more of the multimodal polymer as defined above or below. Typically, the LMW component forms 45 to 55% and the HMW component forms 55 to 45% of the blend.

The HMW component of said multimodal ethylene polymer has a lower MFR$_2$ than the LMW component.

The multimodal ethylene polymer of the invention may be an ethylene homopolymer or copolymer. By ethylene homopolymer is meant a polymer which is formed essentially only ethylene monomer units, i.e. is 99.9 wt% ethylene or more. It will be appreciated that minor traces of other monomers may be present due to industrial ethylene containing trace amounts of other monomers.

The multimodal ethylene polymer of the invention may also be a copolymer (and is preferably a copolymer) and can therefore be formed from ethylene with at least one other comonomer, e.g. C$_{3-20}$ olefin. Preferred comonomers are alphaolefins, especially with 3-8 carbon atoms. Preferably, the comonomer is selected from the group consisting of propene, 1-butene, 1-hexene, 4-methyl-1-pentene, 1-octene, 1,7-octadiene and 7-methyl-1,6-octadiene. The use of 1-hexene or 1-butene is most preferred.

The multimodal ethylene polymer of the invention can comprise one monomer or two monomers or more than 2 monomers. The use of a single comonomer is preferred. If two comonomers are used it is preferred if one is a $C_{3-8}$ alpha-olefin and the other is a diene as hereinbefore defined.

The amount of comonomer is preferably such that it comprises 0-3.0 mol%, more preferably 0.1-2.0 mol% and most preferably 0.1-1.5 mol% of the ethylene polymer. Values under 1.0 mol% are also envisaged, e.g. 0.1 to 1.0 mol%. These can be determined by NMR.

It is preferred however if the ethylene polymer of the invention comprises a LMW homopolymer component and a HMW ethylene copolymer component, e.g. an ethylene hexene copolymer or an ethylene butene copolymer.

For the preparation of the multimodal ethylene polymer of the present invention polymerisation methods well known to the skilled person may be used. It is within the scope of the invention for a multimodal, e.g. at least bimodal, polymers to be produced by blending each of the components *in-situ* during the polymerisation process thereof (so called in-situ process) or, alternatively, by blending mechanically two or more separately produced components in a manner known in the art.

Polyethylenes useful in the present invention is preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the polyethylene polymer used in the blend of the invention are produced in at least two-stage polymerization using a single site catalyst or Ziegler Natta catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene. Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

The multimodal polyethylenes of the invention are commercial products and can be purchased from various suppliers.

## UHMW Component

The pipes of the invention further comprises component (B) an UHMW polyethylene homopolymer component in an amount of 5 to 45 wt%. Preferably, this UHMWPE comprises 7 to 20 wt%, such as 8 to 15 wt% of the blend. It will be appreciated that the UHMW component is different to the (A) component of the blend.

The UHMW polyethylene component of the blends of the invention preferably has a nominal viscosity molecular weight (Mv) of 1,000,000 to 4,000,000 g/mol, preferably 1,500,000 to 4,000,000 g/mol, more preferably 2,000,000 to 3,500,000 g/mol, such as 2,000,000 to 3,250,000 g/mol. It has been found that when using a polyethylene having such an Mv that the properties of the blend can be very good.

The UHMW polyethylene of the invention is an ethylene homopolymer. The UHMW component is also preferably unimodal. This means that it has a single peak on GPC. Ideally it is formed from a single component and is therefore produced in a single manufacturing step.

The UHMW polyethylene of the invention can be prepared by conventional processes. Preferably, the UHMW polyethylene is prepared using a Ziegler-Natta catalyst. These UHMW polymers are commercially available polymers.

The density of the UHMW component can be in the range 920 to 960 kg/m³, preferably 925 to 945 kg/m³.

This component typically has a very low MFR, such as an $MFR_{21}$ of less than 0.5 g/10min, especially $MFR_{21}$

of less than 0.1 g/10min, more especially less than 0.05 g/10min.

The intrinsic viscosity of the UHMW component is preferably at least 9 dl/g, preferably at least 12 dl/g, such as at least 14 dl/g. The intrinsic viscosity of the UHMW component should preferably not exceed 23 dl/g, more preferably not exceed 20 dl/g.

**Preparation of Blend**

The blends of the invention may be prepared simply by mixing the components but to ensure homogeneity but for maximum pipe performance it will be appreciated that the components have to be compounded. This can be achieved by any conventional method known to those skilled in the art, e.g. extrusion or kneading, preferably extrusion.

Where extrusion is used to prepare the blends of the invention, a second extrusion step may optionally be employed, e.g. under the same conditions as the first. It has been found that the use of two or more extrusion steps can improve homogeneity. In the context of blends comprising the UHMW polyethylene of the invention, the use of 3 extrusion steps or more are possible. For maximum pipe performance, we suggest that the use of 4 extrusion steps is ideal. There is however, a trade off here. Too many extrusion steps and the polymer can degrade. The use of 2 to 4 extrusions is ideal, e.g. 4 extrusions. This is called 4-pass herein.

It is preferred if the Mv of the polymer is not greater than 4,000 kg/mol. As Mv increases, in order to ensure homogeneity in a blend with the multimodal HDPE component, numerous extrusion steps are required. These extrusion steps result however in a degradation in the blend and a loss of properties.

The range of Mv 1,000 to 4,000 kg/mol as claimed herein is therefore the best range to ensure good pipe properties but without the issues of degradation that can occur during multiple extrusions of exceptional high Mv polymers.

The use of extrusion to homogenise the compositions is preferred, in particular the use of a co-rotating twin extruder, such as ZSK 18 or ZSK 40. Extrusion conditions will be familiar to the skilled person. Appropriate temperatures include 220 to 240°C, such as 225 to 235°C. Screw speeds of 100 to 200 rpm, such as 100 to 150 rpm are appropriate. In general, slower throughput rates encourage homogeneity. Each extrusion step is preferably carried out under the same conditions.

Each extrusion step can be affected using the same extruder or a series of extruders can be used such that material that has been extruded by a first extruder passes to a second extruder and so on. The material is deemed extruded once it has passed through the extruder, been cooled down and pelletized. Polymer which is deemed 4-pass extrusion has therefore passed through the extruder 4 times. The pellets obtained after the first extrusion are added to an extruder to carry out the second extrusion and so on.

It will be appreciated that prior to forming the blend of the invention, the two polymer components of the invention may be blended with standard additives and adjuvants known in the art. They may also contain additional polymers, such as carrier polymers of the additive masterbatches. The properties of the components of the blend and the blend itself can be measured in the absence of or in the presence of any additives. It will be preferred if any additives are present however when properties are determined.

Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups.

Examples of sterically hindered phenols are, among others, 2,6-di-tert-butyl - 4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010) octadecyl-3-3(3'5'-di-tert-butyl-4'-hydroxyphenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-t-butylphenyl) phosphite (sold, e.g., by Ciba Specialty Chemicals under the trade name of Irgafos 168), tetrakis-(2,4-di-*t*-butylphenyl)-4,4'-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4).

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'-dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), *p*-(*p*-toluene-sulfonylamido)-diphenylamine (sold, e.g., by Chemtura under the trade name of Naugard SA) and *N*,*N'*-diphenyl-*p*-phenylene-diamine (sold, e.g., by Chemtura under the trade name of Naugard J).

Commercially available blends of antioxidants and process stabilizers are also available, such as Irganox B225, Irganox B215 and Irganox B561 marketed by Ciba-Specialty Chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch where it is premixed with a polymer, preferably high density polyethylene (HDPE), in a specific amount. Suitable masterbatches are, among others, HD4394, sold by Cabot Corporation, and PPM1805 by Poly Plast Muller. Also titanium oxide may be used as an UV-screener.

It is particular preferred therefore if carbon black is present in the blends of the invention.

Components (A) and (B) in the polymer blend of the invention can be further blended with any other polymer of interest or used on its own as the only olefinic material in an article. Thus, the ethylene polymer of the invention can be blended with known HDPE, MDPE, LDPE, LLDPE polymers. Ideally however any pipe made from the ethylene polymer blend is the invention consists essentially of the polymer blend, i.e. contains the multimodal polyethylene component and the UHMWPE component and any additives.

**Pipe Properties**

The blends of the invention are used in the formation of pipes. Where the term "pipe" is used herein it is meant to cover pipes as well as all supplementary parts for pipes such as fittings, valves, chambers and all other parts which are commonly necessary for a piping system. Pipes can be manufactured using various techniques such as RAM extrusion or screw extrusion. The actual pipe extrusion process does not count as an extrusion step for extruding the blend.

It will be appreciated that many pipes are cross-linked however the pipes of the invention are preferably uncrosslinked. Whilst it is of course possible that some degree of crosslinking can occur during the pipe extrusion process, there is no specific crosslinking step in the process of the invention.

It is preferred if the pipes of the invention meet PE125 standard. PE125, i.e. the pipes of the invention are able to withstand 100 h at 14.5 MPa. It is also preferred if the pipes of the invention are able to withstand (i.e. not fail) after 1000 h at 13.9 MPa. Ideally, pipes of the invention meet both of these requirements. Test protocols (at 20°C) for these tests are described below. The pressure test is carried out on un-notched 32 mm SDR 11 pipes having a length of 450 mm in water-inside and water-outside environment according to ISO 1167-1:2006. End caps of type A were used.

More preferably, pipes of the invention do not fail after 2000 h at 13.9 MPa stress, especially do not fail after 3000 h at 13.9 MPa stress. Pipes of the invention are preferably pressure pipes therefore.

The pipes of the invention may be used for the transportation of fluids, such as tap water or natural gas, transported in a pipe often are pressurized and have varying temperatures, usually within a range of 0°C to 50°C.

With the pipe according to the invention, it is especially the stiffness of the composition which is dramatically improved thus enabling the production of pipes with significantly increased minimum required strength (MRS). In addition to the higher stiffness also improved sagging resistance can be seen from the Eta747 results presented in the examples. The blends used in the pipes of the invention can have an Eta747 value at least 10 times higher, sometimes as much as 20 times higher than the HDPE component (A) alone.

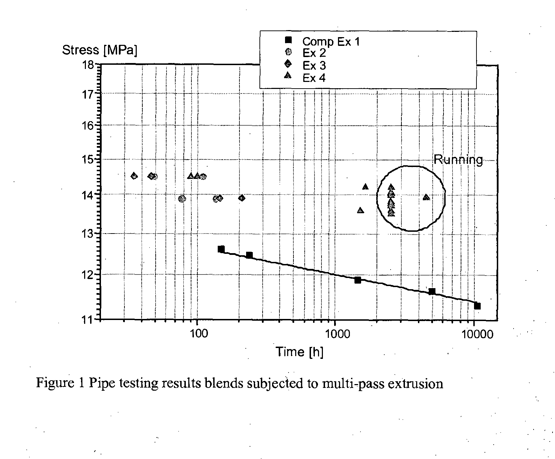

The invention will now be described with reference to the following non limiting examples and figure. Figure 1 shows the stress (MPa) vs time for the pipes of the invention.

**Analytical tests**

**Melt Flow Rate**

The melt flow rate (MFR) is determined according to ISO 1133 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

**Density**

Density of the polymer was measured according to ISO 1183-1:2004 Method A on compression moulded specimen prepared according to EN ISO 1872-2 (February 2007) and is given in $kg/m^3$.

**Molecular weight**

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where

$Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where

$Mn_b$ is the weight average molecular weight of the blend,
$w_i$ is the weight fraction of component "i" in the blend and
$Mn_i$ is the weight average molecular weight of the component "i".

**Nominal viscosity molecular weight (Mv)** is calculated from the intrinsic viscosity [η] according to ASTM D 4020 - 05

$Mv = 5.37 \times 10^4 \times [\eta]^{1.37}$

**Rheology**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad\qquad (1)$$

If the applied strain is within the linear viscoelastic regime, the resulting sinusoidal stress response can be given by

$$\sigma(t) = \sigma_0 \sin(\omega t + \delta) \tag{2}$$

where

$\sigma_0$ and $\gamma_0$ are the stress and strain amplitudes, respectively
$\omega$ is the angular frequency
$\delta$ the phase shift (loss angle between applied strain and stress response) t is the time

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta''$ and the loss tangent, tan $\delta$ which can be expressed as follows:

$$G' = \frac{\sigma_0}{\gamma_0} \cos \delta \quad [Pa] \tag{3}$$

$$G'' = \frac{\sigma_0}{\gamma_0} \sin \delta \quad [Pa] \tag{4}$$

$$G^* = G' + iG'' \quad [Pa] \tag{5}$$

$$\eta^* = \eta' - i\eta'' \quad [Pa.s] \tag{6}$$

$$\eta' = \frac{G''}{\omega} \quad [Pa.s] \tag{7}$$

$$\eta'' = \frac{G'}{\omega} \quad [Pa.s] \tag{8}$$

The values of storage modulus (G'), loss modulus (G"), complex modulus (G*) and complex viscosity ($\eta^*$) were obtained as a function of frequency ($\omega$. Thereby, e.g. $\eta^*_{0.05 \text{ rad/s}}$ (eta*$_{0.05 \text{ rad/s}}$) is used as abbreviation for the complex viscosity at the frequency of 0.05 rad/s or $\eta^*_{300 \text{ rad/s}}$ (eta*$_{300 \text{ rad/s}}$) is used as abbreviation for the complex viscosity at the frequency of 300 rad/s.

Besides the above mentioned rheological functions one can also determine other rheological parameters such as the so-called elasticity index $EI(x)$. The elasticity index $Ei(x)$ is the value of the storage modulus, G' determined for a value of the loss modulus, G" of x kPa and can be described by equation 10.

$$EI(x) = G' \; for \; (G'' = x \; kPa) \; \text{[Pa]} \qquad\qquad (9)$$

For example, the EI (5kPa) is the defined by the value of the storage modulus G', determined for a value of G" equal to 5 kPa.

The determination of so-called Shear Thinning Indexes is done, as described in equation 10.

$$SHI(x/y) = \{ Eta^T * \; for \; (G'* = x \; kPa) \}/\{ Eta^T * \; for \; (G'* = y \; kPa) \}\; [Pa]$$

$$(10)$$

For example, the $SHI_{(2.7/210)}$ is defined by the value of the complex viscosity, in Pa·s, determined for a value of G* equal to 2.7 kPa, divided by the value of the complex viscosity, in Pa·s, determined for a value of G* equal to 210 kPa. The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"- Interpolate y-values to x-values from parameter"* and the *"logarithmic interpolation type"* were applied.

The polydispersity index, *PI,* is defined by equation 11.

$$PI = \frac{10^5}{G'(\omega_{COP})}, \qquad \omega_{COP} = \omega \; for \; (G' = G'') \qquad\qquad (11)$$

where, $\omega_{COP}$ is the cross-over angular frequency, determined as the angular frequency for which the storage modulus, G' equals the loss modulus, G".

## Eta747:

The creep test was performed on an Anton Paar MCR 501 stress controlled rotational rheometer, using a parallel plate geometry of 25 mm and setting a gap of 1.8 mm. Sample preparation was done by compression moulding at 200°C. The melting and pressure loading process used on the compression moulding, were done for a total time of 5 minutes. The creep test was done at 190°C, by the application of a constant shear stress, $\tau$ of 747 Pa. The measurement starting was set for a normal force of less than 3,5 N. The resulting response was monitored in terms of both deformation, $\gamma$ and shear viscosity, $\eta$, over a total creep time of 1860 s. The so-called ETA747 is the shear viscosity determined for a creep time of 1740 s. The appropriate applied creep stress was previously determined by means of an oscillatory shear measurement, in order to ensure a creep response within the linear viscoelastic region.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

## Intrinsic viscosity

The reduced viscosity (also known as viscosity number), $\eta_{red}$, and intrinsic viscosity, $[\eta]$, of polyethylenes and polypropylenes are determined according to the ISO 1628-3: "Determination of the viscosity of polymers in dilute solution using capillary viscometers".

Relative viscosities of a diluted polymer solution (~1mg/ml) and of a pure solvent (decahydronaphthalene) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. The sample is weighed out and directly placed into the capillary. The capillary is filled with the exact volume of solvent by use of an automatic pipette. The sample is dissolved with constant stirring until complete dissolution is achieved (typically within 60-90min).

The efflux time of the polymer solution as well as of the pure solvent are measured several times until three consecutive readings do not differ for more than 0.1s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}} \qquad [dimensionless]$$

Reduced viscosity ($\eta_{red}$) is calculated using the equation:

$$\eta_{red} = \frac{t_{solution} - t_{solvent}}{t_{solvent} * C} \qquad [dl/g]$$

where C is the polymer solution concentration at 135°C: $C = \dfrac{m}{V\gamma}$.

and *m* is the polymer mass, *V* is the solvent volume, and $\gamma$ is the ratio of solvent densities at 20°C and 135°C ($\gamma = \rho_{20}/\rho_{135} = 1.107$).

The calculation of intrinsic viscosity [$\eta$] is performed by using the Schulz-Blaschke equation from the single concentration measurement:

$$[\eta] = \frac{\eta_{red}}{1 + K + C + \eta_{red}}$$

where K is a coefficient depending on the polymer structure and concentration. For calculation of the approximate value for [$\eta$], K=0.27.

**Quantification of comonomer content by FTIR spectroscopy**

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 $\mu$m and spectra recorded in transmission mode.

Specifically, the ethylene content of a polypropylene-co-ethylene copolymer is determined using the baseline corrected peak area of the quantitative bands found at 720-722 and 730-733 cm$^{-1}$. Specifically, the butene or hexene content of a polyethylene copolymer is determined using the baseline corrected peak area of the quantitative bands found at 1377-1379 cm$^{-1}$. Quantitative results are obtained based upon reference to the film thickness.

**XHI**

About 0.3 g of the polymer (m1) are weighed and put in a mesh of metal. The polymer and the mesh are weighed together (m2). The metal mesh (with polymer) is left in 700 ml boiling xylene for 5 hours in a 1000 ml round bottom flash under reflux. Thereafter the metal mesh (with polymer) is dropped directly into about 700 ml "fresh" xylene and boiled for another hour. Subsequently the mesh is dried under vacuum over night at 90 °C and weighed again (m3). The XHI (%) is calculated according to the formula below:

$$XHI\ (\%) = 100 - ((m2-m3) \times 100/m1)$$

**Examples**

UHMW PE1 homopolymer was purchased from Jingchem Corporation under the tradename UHMWPE-M2. It has a narrow, quite well defined Mv of 2,750 kg/mol by ASTM 4020-81 (denoted in material info from the supplier).

HE3490-LS-H is a commercial bimodal HDPE available from Borealis AG.

**Table 1: properties of HE3490-LS-H**

|  | Tm | Tc | MFR$_{21}$ | density |
|---|---|---|---|---|
| HE3490-LS-H | 130 °C | 117 °C | 9 | 959 kg/m$^3$ |

**Table 2: Properties of UHMWPE1**

|  | Mv kg/mol | Density kg/m$^3$ | Tm °C |
|---|---|---|---|
| **UHMW-PE1** | 2,450 | 935 | 135 |

**Example 1**

All polymer blends (90 wt% HE3490-LS-H and 10 wt% UHMWPE1) and the reference sample of HE3490-LS-H were prepared with a co-rotating TSE ZSK 18 extruder. In order to identify the benefits of homogeneity, blends were prepared with the following processing conditions. All blends were extruded at 230~235°C, 120 rpm and a low throughput rate of 0.5~1.5 kg/h) by mono or multi-pass compounding. Blends were prepared by 1 pass, 3-pass or 4-pass compounding.

Example 2 - Pipe extrusion:

For the pressure test the compositions were extruded to 32 x 3mm SDR11 pipes. The extrusion was performed on a Battenfeld Pro 45- 30D extruder and a 3-zone screw. Extrusion conditions were as follows. Melt temperature Tm: 215°C, screw speed 40 rpm, output 32 kg/h. The following temperature profile was applied for pipe extrusion:

|  | Inlet | Cylinder zones 1-4 | Pipe Head zones 1-8 | Die |
|---|---|---|---|---|
| [°C] | 55 | 185 | 205 | 210 |

**Pipe Testing**

The pressure test on un-notched 32 mm SDR 11 pipes having a length of 450 mm is carried out in water-inside and water-outside environment according to ISO 1167-1:2006. End caps of type A were used. The time to failure is determined in hours.

Pipe properties of UHMWPE1/HE3490-LS-H blends are shown in figure 1 and table 3 in comparison to the reference HE3490-LS-H.

Table 3

| TRS No. | Stress (MPa) | HE3490-LS-H | Ex 2 | Ex 3 | Ex 4 |
|---|---|---|---|---|---|
| | | | Failure time (h) | | |
| | | | 10% UHMWPE1 | 10% UHMWPE1 | 10% UHMWPE1 |
| Recipe | | | | | |
| Extrusion | | | 1-pass | 3-pass | 4-pass |
| Pipe testing at 20°C | 14.5 | | 110 | 35 | 90 |
| | 14.5 | | 49 | 47 | 110 |
| | 14.2 | | | | >2521 |
| | 14.2 | | | | 1653 |
| | 14.1 | | | | >2521 |
| | 14.1 | | | | >2521 |
| | 14.0 | | | | >2521 |
| | 14.0 | | | | >2521 |
| | 13.9 | | | 211 | >4537 |
| | 13.9 | | | 147 | >4537 |
| | 13.8 | | | | >2521 |
| | 13.8 | | | | >2521 |
| | 13.7 | | | | >2521 |
| | 13.7 | | | | >2521 |
| | 13.6 | | | | 1523 |
| | 13.6 | | | | >2521 |
| | 13.5 | | | | >2521 |
| | 13.5 | | | | >2521 |
| | 12.6 | 150 | | | |
| | 12.5 | 240 | | | |
| | 11.9 | 1459 | | | |
| | 11.6 | 5003 | | | |
| | 11.3 | 10420 | | | |

All examples have better creep resistance than the reference, especially the 4-pass material. The 4-pass material passed both quality control points of PE125, i.e., 100h at 14.5MPa and 1000h at 13.9MPa.

Rheological and other properties are summarized in table 4.

Table 4 Summary of rheological and other properties.

| Sample | | Comp. Ex-1 | Ex 2 | Ex 3 | Ex 4 |
|---|---|---|---|---|---|
| Description | | HE3490-LS-H | 10% UHMW, 1-pass | 10% UHMW, 3-pass | 10% UHMW, 4-pass |
| Density | Kg/m$^3$ | 959 | 957 | 957 | 956 |
| MWD | | 30.1 | 36.9 | 24.4 | 20.9 |
| MFR5 | g/10min | 0.3 | 0.07 | 0.07 | 0.02 |
| MFR21 | g/10min | 8.97 | 3.15 | 3.28 | 2.17 |
| FRR 21/5 | | 29.9 | 45 | 47 | 108 |
| PI | (Pa$^{-1}$) | 3.5 | 3.3 | 4.9 | --- |
| SHI (2.7/2.10) | | 152.8 | 163.1 | 272 | --- |

(continued)

| Sample | | Comp. Ex-1 | Ex 2 | Ex 3 | Ex 4 |
|---|---|---|---|---|---|
| Description | | HE3490-LS-H | 10% UHMW, 1-pass | 10% UHMW, 3-pass | 10% UHMW, 4-pass |
| eta-0.05rad/s | (Pa.s) | 183700 | 345700 | 334100 | 379400 |
| eta-300rad/s | (Pa.s) | 1139 | 1472 | 1462 | 1265 |
| XHI | (%) | 0 | 0.82 | 0.81 | 0.79 |
| Eta747 | Pa.s | 691,120 | 1,957,200 | 6,029,200 | **18,662,000** |

The frequency sweep curve of Ex 4 suggests network formation in the polymer. On the other hand, although addition of the UHMWPE leads to slight increase of XHI value, 1-pass, 3-pass and 4-pass materials have nearly identical low XHI results. This indicates that multi-pass extrusion did not cause abundant crosslinking.

Another interesting feature is Eta747 of the multi-pass materials. Especially in comparison to 1-pass material, the multi-pass materials have increased Eta747 that suggests improved sagging resistance. In particular 4-pass material has an Eta747 more than 20 times higher than HE3490-LS-H and nearly 10 times higher than the 1-pass material. It is most surprising that the eta 747 is increasing significant whereas the MFR is stable or decreasing slightly.

## Claims

1. A pipe comprising high density polyethylene blend, comprising

 (A) 55 to 95 wt% of a high density multimodal polyethylene component having a density of at least 940 kg/m$^3$ when measured according to ISO 1183-1:2004 method A, and
 (B) 5 to 45 wt% of an ultra-high molecular weight polyethylene homopolymer having a nominal viscosity molecular weight Mv of 1,500,000 to 4,000,000 g/mol (UHMW polyethylene) when measured according to ASTM D 4020 - 05;
 wherein components (A) and (B) are different;
 and wherein said blend has an MFR$_{21}$ of 10.0 g/10min or less when measured according to ISO 1133 at 190 °C under 21.6 kg load, and a density of at least 940 kg/m$^3$.

2. A pipe as claimed in any preceding claim which does not fail before 100 h at a stress of 14.5 MPa and/or before 1000 h at 13.9 MPa. (150 1167-1:2006)

3. A pipe as defined in any preceding claim, wherein component (A) is a copolymer having 0.1 to 2.0 mol% comonomer. (FTIR spectroscopy).

4. A pipe as defined in any preceding claim, wherein component (A) has an MFR$_{21}$ of 1 to 20 g/10min.

5. A pipe as defined in any preceding claim, wherein component (A) comprises an ethylene homopolymer component and a butene or hexene ethylene copolymer component.

6. A pipe as defined in any preceding claim, wherein component (A) is present in an amount of 80 to 93 wt% and component (B) in an amount of 7 to 20 wt%.

7. A pipe as claimed in any preceding claim wherein component (B) has an Mv of 2,000 to 4,000 kg/mol, preferably 2,250 to 3,500 kg/mol.

8. A pipe as claimed in any preceding claim wherein component (B) has a density of 925 to 945 kg/m$^3$.

9. A pipe as claimed in any preceding claim having an MFR$_{21}$ of 0.1 to 8 g/10min.

10. A pipe as claimed in any preceding claim further comprising 0.5 to 5 wt% of carbon black.

11. A pipe as claimed in any preceding claim wherein said blend has an eta 747 of 10,000 kPas or higher.

**12.** A pipe as claimed in any preceding claim wherein component (A) has a Mw of 70,000 to less than 400,000 g/mol.

**13.** A pipe as claimed in any preceding claim wherein the blend is extruded at least three times, preferably 4 times, before forming the pipe.

**14.** A process for the preparation of a pipe comprising mixing

(A) 55 to 95 wt% of a high density multimodal polyethylene component having a density of at least 940 kg/m$^3$ when measured according to ISO 1183-1:2004, and
(B) 5 to 45 wt% of an ultra-high molecular weight polyethylene homopolymer having a nominal viscosity molecular weight Mv of 1,000,000 to 4,000,000 g/mol (UHMW polyethylene) when measured according to ASTM D 4020 - 05;
wherein components (A) and (B) are different;
and extruding the formed mixture four times, so as to form a blend having an $MFR_{21}$ of 10.0 g/10min or less when measured according to ISO 1133 at 190 °C under 21.6 kg load, and a density of at least 940 kg/m$^3$;
and forming said blend into a pipe.

**15.** A process as claimed in claim 14 for the preparation of a pipe as defined in any one of claims 1 to 13.

**Patentansprüche**

**1.** Rohr, umfassend eine Polyethylen-hoher-Dichte-Mischung, umfassend

(A) 55 bis 95 Gew.-% von einem multimodalen Polyethylenbestandteil mit hoher Dichte, der eine Dichte von mindestens 940 kg/m$^3$ hat, gemessen gemäß ISO 1183-1:2004 Methode A, und
(B) 5 bis 45 Gew.-% von einem ultrahochmolekularen Polyethylenhomopolymer, das ein Nennviskositätsmolekulargewicht Mv von 1.500.000 bis 4.000.000 g/Mol (UHMW-Polyethylene) hat, gemessen gemäß ASTM D 4020 - 05;
wobei die Bestandteile (A) und (B) verschieden sind;
und wobei die Mischung einen $MFR_{21}$ von 10,0 g/10 min oder weniger, gemessen gemäß ISO 1133 bei 190°C unter einer Last von 21,6 kg, und eine Dichte von mindestens 940 kg/m$^3$ hat.

**2.** Rohr nach einem der vorhergehenden Ansprüche, das bei einer Belastung von 14,5 MPa nicht vor 100 h und/oder bei 13,9 MPa vor 1000 h versagt (ISO 1167-1: 2006).

**3.** Rohr nach einem der vorhergehenden Ansprüche, wobei der Bestandteil (A) ein Copolymer ist, das 0,1 bis 2,0 Mol-% Comonomer hat (FTIR-Spektroskopie).

**4.** Rohr nach einem der vorhergehenden Ansprüche, wobei der Bestandteil (A) einen $MFR_{21}$ von 1 bis 20 g/10 min hat.

**5.** Rohr nach einem der vorhergehenden Ansprüche, wobei der Bestandteil (A) einen Ethylenhomopolymerbestandteil und einen Buten- oder Hexenethylencopolymerbestandteilt umfasst.

**6.** Rohr nach einem der vorhergehenden Ansprüche, wobei der Bestandteil (A) in einer Menge von 80 bis 93 Gew.-% und der Bestandteil (B) in einer Menge von 7 bis 20 Gew.-% vorhanden ist.

**7.** Rohr nach einem der vorhergehenden Ansprüche, wobei der Bestandteil (B) ein Mv von 2.000 bis 4.000 kg/Mol, vorzugsweise 2.250 bis 3.500 kg/Mol, hat.

**8.** Rohr nach einem der vorhergehenden Ansprüche, wobei der Bestandteil (B) eine Dichte von 925 bis 945 kg/m$^3$ hat.

**9.** Rohr nach einem der vorhergehenden Ansprüche, welches einen $MFR_{21}$ von 0,1 bis 8 g/10 min hat.

**10.** Rohr nach einem der vorhergehenden Ansprüche, ferner umfassend 0,5 bis 5 Gew.-% Ruß.

**11.** Rohr nach einem der vorhergehenden Ansprüche, wobei die Mischung eine eta 747 von 10.000 kPas oder höher hat.

**12.** Rohr nach einem der vorhergehenden Ansprüche, wobei der Bestandteil (A) ein Mw von 70.000 bis weniger als 400.000 g/Mol hat.

**13.** Rohr nach einem der vorhergehenden Ansprüche, wobei die Mischung mindestens dreimal, vorzugsweise viermal, extrudiert wird, bevor das Rohr geformt wird.

**14.** Verfahren zur Herstellung eines Rohrs, umfassend das Mischen von

(A) 55 bis 95 Gew.-% von einem multimodalen Polyethylenbestandteil mit hoher Dichte, der eine Dichte von mindestens 940 kg/m$^3$ hat, gemessen gemäß ISO 1183-1:2004, und
(B) 5 bis 45 Gew.-% von einem ultrahochmolekularen Polyethylenhomopolymer, das ein Nennviskositätsmolekulargewicht Mv von 1.000.000 bis 4.000.000 g/Mol (UHMW-Polyethylene) hat, gemessen gemäß ASTM D 4020 - 05;
wobei die Bestandteile (A) und (B) verschieden sind;
und das viermalige Extrudieren der gebildeten Mischung, um eine Mischung zu bilden, die einen MFR$_{21}$ von 10,0 g/10 min oder weniger, gemessen gemäß ISO 1133 bei 190 °C unter einer Last von 21,6 kg, und eine Dichte von mindestens 940 kg/m$^3$ hat;
und das Formen der Mischung zu einem Rohr.

**15.** Verfahren nach Anspruch 14 zur Herstellung eines Rohrs nach einem der Ansprüche 1 bis 13.


**Revendications**

**1.** Tuyau comprenant un mélange de polyéthylène de haute densité, comprenant :

(A) 55 à 95 % en poids d'un composant de polyéthylène multimodal de haute densité ayant une masse volumique d'au moins 940 kg/m$^3$ lorsqu'on la mesure selon la norme ISO 1183-1:2004, procédé A, et
(B) 5 à 45 % en poids d'un homopolymère de polyéthylène de poids moléculaire ultra élevé ayant une masse moléculaire en viscosité nominale Mv de 1 500 000 à 4 000 000 g/mol (polyéthylène UHMW) lorsqu'elle est mesurée selon la norme ASTM D 4020-05,
dans lequel les composants (A) et (B) sont différents ; et
dans lequel ledit mélange a un MFR$_{21}$ de 10,0 g/10 min ou moins lorsque l'on effectue la mesure selon la norme ISO 1133 à 190 °C sous charge de 21,6 kg et une masse volumique d'au moins 940 kg/m$^3$.

**2.** Tuyau selon l'une quelconque des revendications précédentes, qui n'a pas de défaillance avant 100 h sous une contrainte de 14,5 MPa et/ou avant 1000 h à 13,9 MPa (norme ISO 1167-1:2006).

**3.** Tuyau selon l'une quelconque des revendications précédentes, dans lequel le composant (A) est un copolymère ayant 0,1 à 2,0 % en mol de comonomère (spectroscopie FTIR).

**4.** Tuyau selon l'une quelconque des revendications précédentes, dans lequel le composant (A) a un MFR$_{21}$ de 1 à 20 g/10 min.

**5.** Tuyau selon l'une quelconque des revendications précédentes, dans lequel le composant (A) comprend un composant d'homopolymère d'éthylène et un composant de copolymère de butène ou d'hexène éthylène.

**6.** Tuyau selon l'une quelconque des revendications précédentes, dans lequel le composant (A) est présent en quantité de 80 à 93 % en poids et le composant (B) en quantité de 7 à 20 % en poids.

**7.** Tuyau selon l'une quelconque des revendications précédentes, dans lequel le composant (B) a une Mv de 2000 à 4000 kg/mol, de préférence de 2250 à 3500 kg/mol.

**8.** Tuyau selon l'une quelconque des revendications précédentes, dans lequel le composant (B) a une masse volumique de 925 à 945 kg/m$^3$.

**9.** Tuyau selon l'une quelconque des revendications précédentes, ayant un MFR$_{21}$ de 0,1 à 8 g/10 min.

**10.** Tuyau selon l'une quelconque des revendications précédentes, comprenant en outre 0,5 à 5 % en poids de noir de carbone.

**11.** Tuyau selon l'une quelconque des revendications précédentes, dans lequel ledit mélange a une et a 747 de 10 000 kPa ou plus.

**12.** Tuyau selon l'une quelconque des revendications précédentes, dans lequel le composant (A) a une Mw de 70 000 à moins de 400 000 g/mol.

**13.** Tuyau selon l'une quelconque des revendications précédentes, dans lequel le mélange est extrudé au moins trois fois, de préférence quatre fois, avant de former le tuyau.

**14.** Procédé de préparation d'un tuyau comprenant le mélange de :

(A) 55 à 95 % en poids d'un composant de polyéthylène multimodal de haute densité ayant une masse volumique d'au moins 940 kg/m$^3$ lorsqu'on la mesure selon la norme ISO 1183-1:2004, et
(B) 5 à 45 % en poids d'un homopolymère de polyéthylène de poids moléculaire ultra élevé ayant une masse moléculaire en viscosité nominale Mv de 1 000 000 à 4 000 000 g/mol (polyéthylène UHMW) lorsqu'elle est mesurée selon la norme ASTM D 4020-05,
dans lequel les composants (A) et (B) sont différents ; et
l'extrusion du mélange formé quatre fois de manière à former un mélange ayant une MFR$_{21}$ de 10,0 g/10 min ou moins lorsqu'on effectue la mesure selon la norme ISO 1133 à 190 °C sous charge de 21,6 kg, et une masse volumique d'au moins 940 kg/m$^3$ ; et
la transformation dudit mélange en tuyau.

**15.** Procédé selon la revendication 14 pour la préparation d'un tuyau selon l'une quelconque des revendications 1 à 13.

Figure 1 Pipe testing results blends subjected to multi-pass extrusion

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007042216 A
- WO 9618677 A
- WO 2006092378 A
- WO 9428064 A
- EP 517868 A

### Non-patent literature cited in the description

- **OGUNNIYI et al.** *Journal of Applied Polymer Science,* 2005, vol. 97, 413-425
- **VADH et al.** *Journal of Applied Polymer Science,* 1986, vol. 32, 5575-5584
- **HUANG ; BROWN.** *Polymer,* 1992, vol. 33, 2989-2997
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- The influence of molecular structure on some rheological properties of polyethylene. **HEINO, E.L.** Borealis Polymers Oy, Porvoo, Finland. Annual Transactions of the Nordic Rheology Society, 1995
- Definition of terms relating to the non-ultimate mechanical properties of polymers. *Pure & Appl. Chem.,* 1998, vol. 70 (3), 701-754